# FASCICULE DE BREVET EUROPEEN

(11) **EP 0 681 017 B1**
(45) Date de publication et mention de la délivrance du brevet: **01.12.1999**
(21) Numéro de dépôt: 95401017.9
(22) Date de dépôt: 03.05.1995
(51) Int. Cl.: C09K 7/02, E21B 43/22, E21B 43/25

(54) **Procédé et fluide à base d'eau pour contrôler la dispersion de solides, application au forage**
Verfahren und wässerige Flussigkeit zur Kontrolle von Feststoffdispersionen und Verwendung für Bohrung
Method and water-based fluid for controlling dispersion of solids; application to drilling

(30) Priorité: 04.05.1994 FR 9405489
(43) Date de publication de la demande: 08.11.1995
(73) Titulaire: INSTITUT FRANCAIS DU PETROLE, 92500 Rueil Malmaison (FR); SOFITECH N.V., 2030 Antwerpen (BE)
(72) Inventeur: Argillier, Jean-François, F-92150 Suresnes (FR); Audibert, Annie, F-78110 Le Vesinet (FR); Bailey, Louise, Comberton, Cambridge CB3 7EQ (GB); Reid, Paul I., St. Neots, Cambridgeshire PE19 3RJ (GB)
(74) Mandataire: Coadour, Jean

(56) Documents cités:
- EP-A- 0 115 703
- EP-A- 0 465 992
- GB-A- 2 213 850
- US-A- 4 529 523
- US-A- 4 694 046
- US-A- 5 208 216
- DATABASE WPI Derwent Publications Ltd., London, GB; AN 83-787503 & SU-A-979 483 (DZIENBAEV) , 7 Décembre 1982

## Description

La présente invention concerne un procédé pour contrôler la dispersion des "cuttings" (débris de forage) dans un fluide à base d'eau utilisé dans un puits pour le forage, le conditionnement ("complétion") ou les interventions ("workover") dans ledit puits. Plus généralement le procédé est adapté à contrôler la dispersion ou le délitage de solides contenus dans le fluide.

Par conditionnement, il faut comprendre ce qui est communément appelé "complétion", c'est à dire les opérations de préparation ou d'équipement nécessaires à la mise en production d'une formation géologique à partir du puits foré. Ces opérations dites de "complétion" mettent en oeuvre des fluides particuliers appelés "fluides de complétion".

Par interventions, il faut comprendre les opérations effectuées dans un puits producteur ou potentiellement producteur. Ces opérations sont communément appelées "work-over". Les fluides de "work-over" peuvent être mis en oeuvre dans le puits producteur en circulation de façon comparable à des fluides de forage ou sous forme de fluide tampon ou "spacer".

Au cours d'une opération de forage de puits pétroliers ou non, on injecte un fluide jusqu'à l'outil de forage par le canal des tubes de forage, le fluide remontant à la surface en circulation ascendante dans l'espace annulaire défini par le trou foré et l'extérieur des tubes de forage. Pour effectuer le forage de la roche dans de bonnes conditions le fluide est déterminé pour avoir des propriétés particulières.

Généralement le fluide doit notamment pouvoir maintenir en suspension les débris de forage lors des arrêts de circulation, entraîner et transporter efficacement les débris vers la surface, avoir une filtration faible à travers les parois perméables du trou, être alourdi suffisamment pour contrôler les pressions, nettoyer l'outil et le front de taille.

Le document US-A-5 208 216 décrit un fluide à base d'eau comportant un polymère acrylamide modifié hydrophobiquement (HMPAM) tel que défini dans les revendications.

De nombreux additifs pour les fluides à base d'eau sont connus pour l'obtention des propriétés requises à un bon fluide de forage.

Pour contrôler la capacité qu'a un fluide à éviter la dispersion des débris de forage, on effectue un test dit "hot rolling cuttings test" par exemple décrit dans le document US-A-4664818 ou le document US-A-5260269.

Ainsi, la présente invention concerne un procédé pour contrôler la dispersion et/ou le délitage de solides en suspension dans un fluide à base d'eau. Le procédé comporte l'étape d'adjonction dans ledit fluide d'une quantité utile d'un polymère, dénommé HM PAM, issu de la polymérisation de motifs hydrophiles avec un motif hydrophobe. Le motif hydrophile comporte :
- de l'acrylamide suivant la formule suivante : 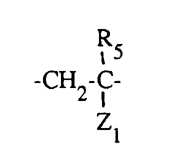 où R₅ est H ou CH₃, et Z₁ est CONH₂,
- et éventuellement des co-monomères d'acide acrylique, d'acrylate ou de sulfonate suivant la formule suivante : 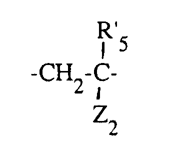 où R'₅ est H ou CH₃, et Z₂ est COOH ou COO⁻, M⁺ ou CONHR₁SO₃⁻, M⁺; R₁ est H ou un radical alkyle, aryle ou alkyl-aryle de C₁-C₃₀,
   le motif hydrophobe du polymère HM PAM a au moins une des formes suivantes : N-alkylacrylamide, alkylacrylate, acrylamide N-substituée ou un acrylate substitué, la partie substituée étant un tensio-actif non ionique, ledit motif hydrophobe ayant la formulation générale suivante : 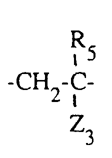 où R₅ est H ou CH₃, et Z₃ est COOR₇, COOR₂, CONR₁R₂, ou CONR₁R₇, R₇ étant un tensioactif non ionique et R₂ un radical alkyle, aryle ou alkyl-aryle de C₁-C₃₀; R₁ est H ou un radical alkyle, aryle ou alkyl-aryle de C₁-C₃₀.

Les polymères hydrosolubles HM PAM sont obtenus par copolymérisation de monomères hydrosolubles avec un monomère hydrophobe selon un rapport molaire hydrophile/hydrophobe de 90/10 à environ 99,995/0,005, préférentiellement de 95/5 à environ 99,9/0,1. Leur masse moléculaire est supérieure à 10⁶ daltons.

Le polymère HM PAM sera dénommé H1PAM lorsqu'il peut être un copolymère d'acrylamide et de méthacrylate de nonyle (c'est à dire R₅ est CH₃; Z₃ est COOR₇ avec R₇=C₉H₁₉), lorsqu'il peut avoir une masse moléculaire d'environ 8 10⁶ daltons et un taux de motifs hydrophobes compris entre 0,5 et 1,5%.

On peut ajouter une quantité utile d'un dérivé cellulosique modifié hydrophobiquement.

Ledit dérivé cellulosique peut être de la cellulose hydroxy éthylée modifiée hydrophobiquement (HM HEC).

La cellulose hydroxy éthylée modifiée peut comporter un radical alkyle hydrophobe comportant entre 4 et 25 atomes de carbone, et préférentiellement entre 8 et 18.

La masse moléculaire de la cellulose hydroxy éthylée modifiée peut être inférieure à 2000000 daltons et préférentiellement comprise entre 20000 et 500000 daltons.

Les dérivés cellulosiques modifiés hydrophobiquement découlent principalement des dérivés cellulosiques classiquement utilisés comme la carboxy méthyl cellulose (CMC), la cellulose hydroxy éthylée (HEC) ou l'hydroxy propyl cellulose (HPC). Ces dérivés peuvent être modifiés chimiquement par l'incorporation de groupements alkyles par réaction chimique affectant certains motifs cellulosiques. Ces dérivés cellulosiques modifiés hydrophobiquement, notamment HM HEC, HM CMC, HM HPC sont décrits dans le document EP-A1-465992.

Le polymère HM HEC ou cellulose hydroxy éthylée modifiée hydrophobiquement a été décrit dans le document US-A-4228277 ainsi que dans la publication "Synthesis and solution properties of hydrophobically modified hydroxyethyl cellulose" de A.C. SAU et L.M. LANDOLL, dans "Polymers in aqueous media: performance through association", J.E. Glass (Ed), Adv. Chem Ser. 213, ACS Wash. 1989.

La HM HEC, non ionique et hydrosoluble peut être préparée à partir de la HEC ou cellulose hydroxy éthylée, par incorporation chimique d'une longue chaîne alkyle entre C₄ et C₂₅, de préférence entre 8 et 18 atomes de carbone pour le motif hydrophobe.

Le motif hydrophobe est lié à la cellulose par une liaison éther ou ester, préférablement éther car ce type de liaison est plus stable lorsque le polymère est en solution aqueuse.

Le taux de motifs hydrophobes peut varier de 0,2 à environ 5%, de préférence entre 0,2 et 1,5% et plus particulièrement entre 0,2 et 1%.

Le polymère HM HEC peut avoir un taux de substitution molaire de motif hydroxy éthyle d'au moins 1,5, de préférence entre 1,5 et 4, c'est-à-dire de 1,5 à 4 moles de substituants hydroxy éthylés par motif anhydroglucose, et une masse moléculaire relativement faible, c'est-à-dire inférieure à 2000000 daltons et de préférence entre 20000 et 500000 (soit un degré de polymérisation de 75 à 1800).

Dans le procédé, on peut ajouter entre 1 et 30 g/l de HM PAM et entre 1 et 30 g/l de HM HEC, et de préférence entre 1 et 6 g/l de HM PAM et entre 1 et 5 g/l de HM HEC.

L'invention concerne également un fluide à base d'eau destiné au forage, au conditionnement d'un puits ou aux interventions dans un puits. Le fluide comporte en quantité utile au moins :
- un polymère, dénommé HM PAM, issu de la polymérisation de motifs hydrophiles avec un motif hydrophobe. Le motif hydrophile comporte :
   - de l'acrylamide suivant la formule suivante : 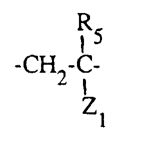
   où R₅ est H ou CH₃, et Z₁ est CONH₂,
- et éventuellement des co-monomères d'acide acrylique, d'acrylate ou de sulfonate suivant la formule suivante : 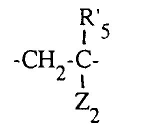 où R'₅ est H ou CH₃, et Z₂ est COOH ou COO⁻, M⁺ ou CONHR₁SO₃⁻, M⁺; R₁ est H ou un radical alkyle, aryle ou alkyl-aryle de C₁-C₃₀,
   le motif hydrophobe du polymère HM PAM a au moins une des formes suivantes : N-alkylacrylamide, alkylacrylate, acrylamide N-substituée ou un acrylate substitué, la partie substituée étant un tensio-actif non ionique, ladite partie hydrophobe ayant la formulation générale suivante : 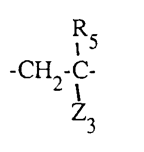 où R₅ est H ou CH₃, et Z₃ est COOR₇, COOR₂, CONR₁R₂, ou CONR₁R₇, R₇ étant un tensioactif non ionique et R₂ un radical alkyle, aryle ou alkyl-aryle de C₁-C₃₀; R₁ est H ou un radical alkyle, aryle ou alkyl-aryle de C₁-C₃₀
- et un dérivé cellulosique modifié hydrophobiquement.

Le polymère HM PAM peut avoir une masse moléculaire comprise entre 10⁶ et 10⁷ daltons et un taux de motifs hydrophobes compris entre 0,5 et 5%.

Le polymère HM PAM, dénommé alors H1PAM, peut être un copolymère d'acrylamide et de méthacrylate de nonyle (c'est à dire R₅ est CH₃; Z₃ est COOR₇ avec R₇=C₉H₁₉), il peut avoir une masse de moléculaire à d'environ 8 10⁶ daltons et un taux de motifs hydrophobes compris entre 0,5 et 1,5%.

Ledit dérivé cellulosique peut être de la cellulose hydroxy éthylée modifiée hydrophobiquement (HM HEC).

La viscosité du fluide peut être principalement contrôlée par l'adjonction d'au moins un polymère choisi dans le groupe constitué par le xanthane, le scléroglucane, le wellane, la cellulose hydroxy éthylée (HEC), la CMC, la gomme de Guar et les polyacrylamides.

Le fluide peut comporter au moins un électrolyte à des concentrations pouvant atteindre la saturation.

Ledit électrolyte peut être choisi dans le groupe constitué par le chlorure, le bromure, le carbonate, l'acétate, le formiate, le sulfate, le silicate, le phosphate, de sodium, de potassium, de calcium, de magnésium ou de zinc.

Le fluide peut comporter entre 0,5 et 30 g/l de HM HEC et de HM PAM, et entre 0,5 et 20 g/l de polymère viscosifiant.

Le fluide peut comporter entre 0,5 et 10 g/l de HM HEC et de HM PAM, entre 1 et 5 g/l de polymère viscosifiant, préférentiellement du xanthane, entre 5 et 100 g/l de KCl ou de NaCl et entre 0 et 30 g/l d'argile réactive.

L'invention peut être appliquée à un fluide de forage.

Le forage peut être avantageusement un forage dit petit diamètre ou "slim-hole" et/ou fortement dévié par rapport à la verticale.

L'invention concerne également un additif pour le contrôle de la dispersion et/ou le délitage de solides en suspension dans un fluide à base d'eau. L'additif comporte du HMPAM et un dérivé cellulosique modifié hydrophobiquement.

Les avantages et les propriétés de la présente invention seront mieux compris à la lecture des tests ci-après décrits.

### Essai 1 : TENUE DES CUTTINGS

Cet essai permet de mesurer la capacité qu'a un fluide de forage, de conditionnement ou d'intervention à ne pas détruire la cohésion d'un solide en suspension dans le fluide, en particulier un débris de formation géologique (cutting).

### Description de la procédure d'essais :

La plupart des essais ont été réalisés sur des "cuttings" ou morceaux d'argile dite "London clay" de taille comprise entre 1 mm et 2.8 mm conservés dans un dessiccateur de telle manière à ce que leur activité en eau soit de l'ordre de 0.9. L'argile London clay contient environ 23% de smectite, 29% d'illite et 11% de kaolinite.

Trois grammes d'argile sont introduits dans une cellule de 300 cm3 contenant 100 cm3 du fluide à tester. Quatre billes d'acier de 16 mm de diamètre sont ensuite introduites dans la cellule. Cette cellule est placée sur un système de mise en rotation pendant une heure et à une température de 30°C.

Le fluide est ensuite tamisé à travers deux filtres en série, dont la taille respective des mailles est de 1 mm et 0.25 mm. On récupère l'argile sur chacun des tamis. Après séchage, l'argile récupérée est pesée.

Les résultats sont donnés sous la forme de pourcentage en poids d'argile récupérée sur chaque tamis par rapport au poids initial d'argile mis en suspension.

Les différents composants des fluides testés sont :
- du Xanthane, de la CMC LV qui est un produit fabriqué par la société AQUALON, de la HM HEC définie ci-dessus et d'un polymère H3 défini ci-après :
   Un polymère hydrophile/hydrophobe, dénommé Hbl, est décrit dans le document FR-A-2686892, apparenté au document PCT/FR93/00090 publié sous le numéro WO-A-93/15164. Le polymère Hb1 est défini dans ces documents comme ayant une structure du type -(**Hb**)-(**Hy**)- avec une répartition statistique, ladite structure étant issue de la polymérisation radicalaire de monomères éthyléniques contenant des fonctions carboxyliques, notamment un copolymère d'acrylate/acrylate d'alkyle C₁-C₃₀ correspondant à la formule suivante : 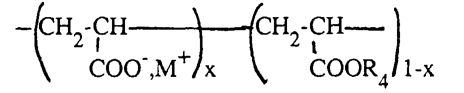 où x est compris entre 0,4 et 0,8, où M est H ou Na ou K ou tout autre ion monovalent, et où la longueur des motifs hydrophobes R₄ est une chaine alkyle, alkyle-aryle C₁-C₃₀ choisie en fonction de la masse moléculaire dudit polymère selon les règles suivantes :
- pour un polymère ayant une masse moléculaire inférieure à environ 10⁵ daltons, R₄ contient au moins deux atomes de carbone,
- pour un polymère ayant une masse moléculaire comprise entre environ 10⁵ et 2,5 10⁶ daltons, R₄ contient au moins quatre atomes de carbone.

Dans une variante, le polymère Hb1 prend le nom de H3 lorsque x a la valeur de 0,8, que R₄ comporte quatre atomes de carbone et que la masse moléculaire du polymère est comprise entre 10⁴ et 5 10⁴ daltons, et préférentiellement proche de 1,7 10⁴ daltons.

### Tests 1: Comparaison de différentes formulations

Formulations:
- **F0** :: Xanthane (4 g/l), KCl (50 g/l)
- **F1** :: Xanthane (4 g/l), CMC LV (10 g/l), KCl (50 g/l)
- **F2** :: Xanthane (4 g/l), CMC LV (10 g/l), H3 (4 g/l), KCl (50 g/l)
- **F3** :: Xanthane (4 g/l), HM HEC (4 g/l), KCl (50 g/l)
- **F4** :: Xanthane (4 g/l), H1PAM (3 g/l), KCl (50 g/l)
- **F5** :: Xanthane (4 g/l), HM HEC (4g/l), H1PAM (3 g/l), KCl (50 g/l)
- **F6** :: Xanthane (4 g/l), H3 (4 g/l), CMC LV (10 g/l), H1PAM (2 g/l), KCl (50 g/l)

| **Formulations** | **F0** | **F1** | **F2** | **F3** |
|---|---|---|---|---|
| **% de déblais récupérés de taille d>1mm** | 0 | 16 | 16 | 0 |
| | | | | |
| **% de déblais récupérés de taille d (1 mm>d>0.25 mm)** | 5 | 80 | 80 | 5 |

Ces quatres premiers essais montrent que dans les mêmes conditions de salinité :
- le xanthane seul délite et disperse les déblais argileux,
- la CMC LV diminue la dispersion, avec la présence ou non du polymère H3. Le polymère H3 n'a donc pas d'influence sensible sur la capacité à ne pas disperser,
- le polymère HM HEC, lui non plus, n'a pas d'influence sensible sur la capacité de la formulation à ne pas disperser.

| **Formulations** | **F4** | **F5** | **F6** |
|---|---|---|---|
| **% de déblais récupérés de taille d>1mm** | 80 | 95 | 42 |
| | | | |
| **% de déblais récupérés de taille d (1 mm>d>0.25 mm)** | 6 | 2 | 50 |

Cette série de tests montrent que :
- le polymère H1PAM diminue très fortement le délitage et la dispersion des déblais,
- l'association du H1PAM avec du HM HEC améliore la capacité de la formulation F5 à diminuer le délitage et la dispersion des déblais,
- le test avec la formulation F6, qui comporte du H3 et un réducteur de filtrat (CMC LV) et une concentration de 2 g/l de H1PAM, montre par comparaison avec la formulation F2, que la dispersion ou délitage est diminuée par la présence du H1PAM.
On peut donc utiliser le H1PAM seul pour contrôler la capacité d'une formulation à diminuer le délitage et la dispersion de déblais. Cependant, une formulation comportant l'association du H1PAM et du HM HEC est encore plus efficace pour contrôler ladite propriété.

### Test 2: Influence de la concentration en polyacrylamide modifié hydrophobiquement (H1PAM)

Dans cette série d'essais a été étudiée l'influence de la concentration en H1PAM.
Formulation de base : H3 (4g/l), Xanthane (2 g/l), HM HEC (4g/l), KCl (50 g/l)

A cette formulation de base sont ajoutées différentes concentrations de H1PAM.

| **Concentration en H1PAM (g/l)** | **0** | **0,5** | **1** | **2** | **3** |
|---|---|---|---|---|---|
| **% de déblais récupérés de taille d>1mm** | 2 | 45 | 55 | 71 | 84 |
| | | | | | |
| **% de déblais récupérés de taille d (1 mm>d>0.25 mm)** | 97 | 50 | 39 | 18 | 10 |

Il est clair que l'influence du H1PAM est forte sur les bons résultats obtenus par ce type de test.

### Test 3: Essai de délitage des déblais réalisés sur des pastilles de bentonite (100% montmorillonite du Wyoming) recompactée: système très réactif

Dans cette série ont été utilisés des déblais constitués par des pastilles de bentonite recompactées. La cellule contenant la suspension argile+formulation est maintenue en rotation pendant 16 heures. Aucune bille n'est introduite dans la cellule. L'argile utilisée est une montmorillonite du Wyoming de composition 70 % Na, 30% Ca. Les pastilles de départ ont une forme cylindrique (hauteur = 5 mm, diamètre = 5 mm), préparées par compaction de l'argile dans une presse à 4 à 5 t/cm². Elles ont alors une activité en eau d'environ 0,5. Les résultats sont représentés en pourcentage en poids de déblais récupérés ayant une taille supérieure à 3,15 mm.
Formulation de base : Xanthane (2 g/l), KCl (50 g/l)

A cette formulation de base sont ajoutés différents agents indiqués dans le tableau ci-dessous

| **Produits ajoutés à la formulation de base** | **% de déblais récupérés (d>3.15mm)** |
|---|---|
| rien | 0 |
| CMC LV (10 g/l) + H3 (4 g/l) | 3 |
| Glycol (40 g/l) | 2 |
| PHPA (2 g/l) | 17 |
| H1PAM (2 g/l) + H3 (4 g/l) | 18 |
| HM HEC (4 g/l) + H3 (4 g/l) | 4 |
| H1PAM (2 g/l) | 17 |
| HM HEC (4 g/l) + H1PAM (2 g/l) | 34 |

La CMC LV est un produit fabriqué par la société AQUALON.

Le PHPA est un polyacrylamide partiellement hydrolysé fabrique par la société SNF Floerger.

Ces résultats montrent que sur un système très réactif, et dans les mêmes conditions de salinité, le comportement du H1PAM est très proche du PHPA pour ce qui concerne leur capacité à diminuer le délitage et la dispersion des déblais.

De plus, ce test confirme que l'association H1PAM et HM HEC présente un effet de synergie et donne d'excellents résultats sur ce système particulièrement réactif.

### Essai 3 : CONTAMINATION PAR LES SOLIDES

Il est important que les fluides que l'on peut utiliser dans un puits foré ou en forage aient une rhéologie relativement stable en présence de colloïdes minéraux.

Ces tests évaluent le comportement du fluide selon l'invention en présence de bentonite non préhydratée. Ils mesurent l'évolution de la viscosité (mPa.s) du fluide, pour différents gradients de cisaillement (s⁻¹ ) et différentes teneurs en bentonite (g/l). Ces mesures sont faites avec un viscosimètre conventionnel du type FANN.

Le fluide comporte: : Xanthane (2 g/l), H3 (4 g/l), HM HEC (4 g/l), H1PAM (2 g/l), KCl (5%)

| **Teneur en bentonite (g/l)** | **0** | **21** | **105** | **160** |
|---|---|---|---|---|
| **Taux de cisaillement (s**^{**-1**}**)** | | | | |
| **17** | 270 | 300 | 380 | 380 |
| **170** | 65 | 70 | 82 | 85 |
| **1021** | 23 | 28 | 31 | 32 |

Le test suivant permet la comparaison avec une formulation d'un fluide classique à base d'eau et comportant du xanthane (4 g/l), de la CMC (10 g/l) et du KCl (5%).

| **Teneur en bentonite (g/l)** | **0** | **21** | **105** | **160** |
|---|---|---|---|---|
| **Taux de cisaillement (s**^{**-1**}**)** | | | | |
| **17** | 270 | 300 | 420 | 440 |
| **170** | 55 | 55 | 60 | 65 |
| **1021** | 23 | 24 | 28 | 32 |

Si l'on compare les deux formulations, on notera que la première formulation, correspondante à une des variantes du fluide de l'invention, présente un meilleur comportement lors de la contamination par les solides. En particulier, l'augmentation de viscosité avec l'augmentation du pourcentage de solides contaminants, mesurée à faible gradient de cisaillement, est bien moindre et atteint même un palier avec la première formulation, contrairement à la deuxième formulation, correspondante à une formulation classique à base d'eau. Ceci permet d'éviter, ou au moins de limiter, l'opération de retraitement du fluide en surface, en particulier la dilution. Le coût opérationnel peut ainsi être diminué.

### Essai 4 : CONTROLE DU FILTRAT

Le contrôle du filtrat est une propriété importante pour un fluide de puits, aussi il est indispensable de vérifier que l'invention n'est pas incompatible avec des caractéristiques suffisantes de réduction du filtrat.

### Test 1 : Comparaison avec des formulations comportant des réducteurs de filtrat classiques (CMC LV et HEC), sans aucun solide

Le fluide de base comporte du xanthane (4 g/l), H3 (4 g/l), KCl (5%) et un réducteur de filtrat : CMC LV, HEC ou HM HEC.

La viscosité VP est donnée en milli Pascal.seconde (mPa.s) et le seuil de cisaillement YV (Yield Value) dans l'unité usuelle en lb/100 ft². On multipliera par 0,4788 pour obtenir des Pa.

| **Réducteur de filtrat** | **CMC LV** | **HEC** | **HM HEC** |
|---|---|---|---|
| **Concentration (g/l)** | 10 | 2 | 4 |
| **Filtrat API - 7'30 (cm**^{**3**}**)** | 97 | 292 | 61 |
| **Filtrat API - 30' (cm**^{**3**}**)** | 102 | 318 | 69 |
| **VP (mPa.s)** | 13 | 11 | 16 |
| **YV (lb/100 ft**^{**2**}**)** | 14.5 | 15.5 | 14 |

Ce test montre l'avantage que procure la présence de HM HEC si l'on désire un filtrat faible.

### Test 2 : Influence de la concentration en HM HEC :

Le fluide de base comporte du xanthane (2 g/l), H3 (4 g/l), HM HEC (2 ou 4 g/l), H1PAM (2 g/l) et de la baryte de Chaillac pour une densité d=1,2.

| | | |
|---|---|---|
| **Concentration en HM HEC (g/l)** | 2 | 4 |
| **Filtrat API - 7'30 (cm**^{**3**}**)** | 3,1 | 2,7 |
| **Filtrat API - 30' (cm**^{**3**}**)** | 5,7 | 5 |
| **VP (mPa.s)** | 12 | 13 |
| **YV (lb/100 ft**^{**2**}**)** | 7 | 11 |

Dans les deux tests, l'épaisseur de cake est inférieure à 1 mm.

### Test 3 : Influence de la présence de H1PAM

Le fluide comporte du xanthane (2 g/l), H3 (4 g/l), HM HEC (2 g/l), HM PAM (0 et 2 g/l, et de la baryte de Chaillac pour obtenir une densité d=1.2.

| | | |
|---|---|---|
| **Concentration en H1PAM (g/l)** | 0 | 2 |
| **Filtrat API - 7'30 (cm**^{**3**}**)** | 3,6 | 3,1 |
| **Filtrat API - 30' (cm**^{**3**}**)** | 7,6 | 5,7 |
| **VP (mPa.s)** | 18 | 12 |
| **YV (lb/100 ft**^{**2**}**)** | 2 | 7 |

Dans les deux tests, l'épaisseur de cake est inférieure à 1 mm.

On notera que l'association de HM HEC avec le HM PAM permet également d'obtenir un meilleur contrôle de la réduction du filtrat.

## Revendications

1. Procédé pour contrôler la dispersion et/ou le délitage de solides en suspension dans un fluide à base d'eau, caractérisé en ce qu'il comporte l'étape d'adjonction dans ledit fluide d'une quantité utile d'un polymère, dénommé HM PAM, issu de la polymérisation de motifs hydrophiles avec un motif hydrophobe, en ce que ledit motif hydrophile comporte au moins :
- de l'acrylamide suivant la formule suivante : 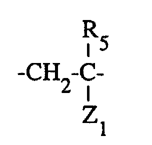 où R₅ est H ou CH₃, et Z₁ est CONH₂,
- et éventuellement des co-monomères d'acide acrylique, d'acrylate ou de sulfonate suivant la formule suivante : 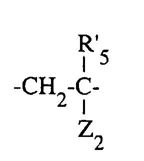 où R'₅ est H ou CH₃, et Z₂ est COOH ou COO⁻, M⁺ ou CONHR₁SO₃⁻, M⁺; R₁ est H ou un radical alkyle, aryle ou alkyl-aryle de C₁-C₃₀,
en ce que ledit motif hydrophobe du polymère HM PAM a au moins l'une des formes suivantes: N-alkylacrylamide, alkylacrylate, acrylamide N-substituée ou un acrylate substitué, la partie substituée étant un tensio-actif non ionique, ledit motif hydrophobe ayant la formulation générale suivante: 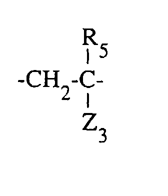 où R₅ est H ou CH₃, et Z₃ est COOR₇, COOR₂, CONR₁R₂, ou CONR₁R₇, R₇ étant un tensioactif non ionique et R₂ un radical alkyle, aryle ou alkyl-aryle de C₁-C₃₀; R₁ est H ou un radical alkyle, aryle ou alkyl-aryle de C₁-C₃₀, et en association une quantité utile d'un dérivé cellulosique modifié hydrophobiquement.

2. Procédé selon la revendication 1, caractérisé en ce que le polymère HM PAM a une masse moléculaire comprise entre 10⁶ et 10⁷ daltons et un taux de motifs hydrophobes compris entre 0,5 et 5%.

3. Procédé selon la revendication 2, caractérisé en ce que le polymère HM PAM, dénommé alors H1PAM, a R₅=CH₃; Z₃=COOR₇ avec R₇=C₉H₁₉, a une masse moléculaire d'environ 8 106 daltons et un taux de motifs hydrophobes compris entre 0,5 et 1,5%.

4. Procédé selon l'une des revendications 1 à 3, caractérisé en ce que ledit dérivé cellulosique est de la cellulose hydroxy éthylée modifiée hydrophobiquement (HM HEC).

5. Procédé selon la revendication 4, caractérisé en ce que la cellulose hydroxy éthylée modifiée comporte un radical alkyle hydrophobe comportant entre 4 et 25 atomes de carbone, et préférentiellement entre 8 et 18.

6. Procédé selon l'une des revendications 4 ou 5, caractérisé en ce que la masse moléculaire de la cellulose hydroxy éthylée modifiée est inférieure à 2000000 daltons et préférentiellement comprise entre 20000 et 500000 daltons.

7. Procédé selon l'une des revendications 1 à 6, caractérisé en ce qu'il comporte entre 1 et 30 g/l de HM PAM et entre 1 et 30 g/l de HM HEC.

8. Procédé selon la revendication 7, caractérisé en ce qu'il comporte entre 1 et 6 g/l de HM PAM et entre 1 et 5 g/l de HM HEC.

9. Fluide à base d'eau destiné au forage, au conditionnement d'un puits ou aux interventions dans un puits, caractérisé en ce qu'il comporte en quantité utile au moins :
a) un polymère, dénommé HMPAM, issu de la polymérisation de motifs hydrophiles avec un motif hydrophobe, en ce que ledit motif hydrophile comporte :
- de l'acrylamide suivant la formule suivante : 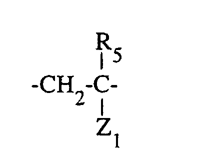 où est H ou CH₃, et Z₁ est CONH₂,
- et éventuellement des co-monomères d'acide acrylique, d'acrylate ou de sulfonate suivant la formule suivante : 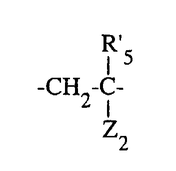 où R'₅ est H ou CH₃, et Z₂ est COOH ou COO⁻, M⁺ ou CONHR₁SO₃⁻, M⁺; R₁ est H ou un radical alkyle, aryle ou alkyl-aryle de C₁-C₃₀,
en ce que le motif hydrophobe du polymère HM PAM a au moins l'une des formes suivantes: N-alkylacrylamide, alkylacrylate, acrylamide N-substituée ou un acrylate substitué, la partie substituée étant un tensio-actif non ionique, ladite partie hydrophobe ayant la formulation générale suivante: 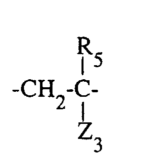 où R₅ est H ou CH₃, et Z₃ est COOR₇, COOR₂, CONR₁R₂, ou CONR₁R₇, R₇ étant un tensioactif non ionique et R₂ un radical alkyle, aryle ou alkyl-aryle de C₁-C₃₀; R₁ est H ou un radical alkyle, aryle ou alkyl-aryle de C₁-C₃₀
b) et un dérivé cellulosique modifié hydrophobiquement.

10. Fluide selon la revendication 9, caractérisé en ce que caractérisé en ce que le polymère HM PAM a une masse moléculaire comprise entre 10⁶ et 10⁷ daltons et un taux de motifs hydrophobes compris entre 0,5 et 5%.

11. Fluide selon la revendication 10, caractérisé en ce que le polymère HM PAM, dénommé alors H1PAM, a R₅=CH₃; Z₃=COOR₇ avec R₇=C₉H₁₉, en ce qu'il a une masse moléculaire d'environ 8 10⁶ daltons et un taux de motifs hydrophobes compris entre 0,5 et 1,5%.

12. Fluide selon l'une des revendications 9 à 11, caractérisé en ce que ledit dérivé cellulosique est de la cellulose hydroxy éthylée modifiée hydrophobiquement (HM HEC).

13. Fluide selon l'une des revendications 9 à 12, caractérisé en ce que sa viscosité est principalement contrôlée par l'adjonction d'au moins un polymère choisi dans le groupe constitué par le xanthane, le scléroglucane, le wellane, la cellulose hydroxy éthylée (HEC), la CMC, la gomme de Guar et les polyacrylamides.

14. Fluide selon l'une des revendications 9 à 13, caractérisé en ce qu'il comporte au moins un électrolyte à des concentrations pouvant atteindre la saturation.

15. Fluide selon la revendication 14, caractérisé en ce que ledit électrolyte est choisi dans le groupe constitué par le chlorure, le bromure, le carbonate, l'acétate, le formiate, de sodium, de potassium, de calcium, de magnésium ou de zinc.

16. Fluide selon l'une des revendications 9 à 15, caractérisé en ce qu'il comporte entre 0,5 et 30 g/l de HM HEC et de HM PAM, et entre 0,5 et 20 g/l de polymère viscosifiant.

17. Fluide selon l'une des revendications 9 à 16, caractérisé en ce qu'il comporte entre 0,5 et 10 g/l de HM HEC et de HM PAM, entre 1 et 5 g/l de polymère viscosifiant, préférentiellement du xanthane, entre 5 et 100 g/l de KCl ou de NaCl et entre 0 et 30 g/l d'argile réactive.

18. Application du fluide selon l'une des revendications 9 à 17 à un fluide de forage.

19. Application selon la revendication 18, caractérisée en ce que le forage est en petit diamètre et/ou fortement dévié.

20. Additif pour le contrôle de la dispersion et/ou le délitage de solides en suspension dans un fluide à base d'eau, caractérisé en ce qu'il comporte en quantité utile au moins :
a) un polymère, dénommé HMPAM, issu de la polymérisation de motifs hydrophiles avec un motif hydrophobe, en ce que ledit motif hydrophile comporte :
- de l'acrylamide suivant la formule suivante : 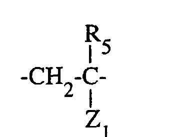 où R₅ est H ou CH₃, et Z₁ est CONH₂,
- et éventuellement des co-monomères d'acide acrylique, d'acrylate ou de sulfonate suivant la formule suivante : 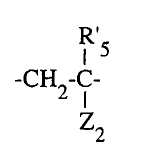 où R'₅ est H ou CH₃, et Z₂ est COOH ou COO⁻, M⁺ ou CONHR₁SO₃⁻, M⁺; R₁ est H ou un radical alkyle, aryle ou alkyl-aryle de C₁-C₃₀,
en ce que le motif hydrophobe du polymère HM PAM a au moins l'une des formes suivantes: N-alkylacrylamide, alkylacrylate, acrylamide N-substituée ou un acrylate substitué, la partie substituée étant un tensio-actif non ionique, ladite partie hydrophobe ayant la formulation générale suivante : 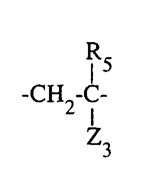 où R₅ est H ou CH₃, et Z₃ est COOR₇, COOR₂, CONR₁R_{2,} ou CONR₁R₇, R₇ étant un tensioactif non ionique et R₂ un radical alkyle, aryle ou alkyl-aryle de C₁-C₃₀; R₁ est H ou un radical alkyle, aryle ou alkyl-aryle de C₁-C₃₀
b) et un dérivé cellulosique modifié hydrophobiquement.

## Patentansprüche

1. Verfahren zum Kontrollieren des Dispergierens und/oder des Zerfallens von Feststoffen, die in einer Flüssigkeit (Fluid) auf Wasserbasis suspendiert sind, dadurch gekennzeichnet, daß man der genannten Flüssigkeit (Fluid) eine geeignete Menge eines Polymers mit der Bezeichnung HM PAM, das hergestellt worden ist durch Polymerisation von hydrophilen wiederkehrenden Einheiten mit einer hydrophoben wiederkehrenden Einheit, wobei die genannte hydrophile wiederkehrende Einheit umfaßt mindestens:
- ein Acrylamid der folgenden Formel: 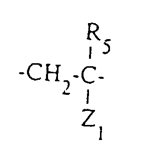 worin R₅ für H oder CH₃ und Z₁ für CONH₂ stehen, und
- gegebenenfalls Acrylsäure-, Acrylat- oder Sulfonat-Comonomere der folgenden Formel: 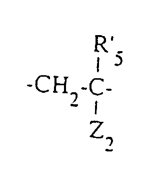 worin R'₅ für H oder CH₃ und Z₂ für COOH oder COO⁻, M⁺ oder CONHR₁SO₃⁻, M⁺ stehen, wobei R₁ H oder einen Alkyl-, Aryl- oder Alkylaryl-Rest mit 1 bis 30 Kohlenstoffatomen bedeutet, und
die genannte hydrophobe wiederkehrende Einheit des Polymers HM PAM mindestens eine der folgenden Formen hat: N-Alkylacrylamid, Alkylacrylat, N-substituiertes Acrylamid oder ein substituiertes Acrylat, wobei der substituierte Abschnitt ein nicht-ionisches Tensid darstellt, und die genannte hydrophobe wiederkehrende Einheit die folgende allgemeine Formel hat: 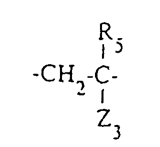 worin R₅ für H oder CH₃ und Z₃ für COOR₇, COOR₂, CONR₁R₂ oder CONR₁R₇ stehen, wobei R₇ ein nicht-ionisches Tensid und R₂ einen Alkyl-, Aryl- oder Alkylaryl-Rest mit 1 bis 30 Kohlenstoffatomen; R₁ H oder einen Alkyl-, Aryl- oder Alkylaryl-Rest mit 1 bis 30 Kohlenstoffatomen bedeuten,
in Kombination (Assoziation) mit einer geeigneten Menge eines hydrophob modifizierten Cellulose-Derivats zugibt.

2. Verfahren nach Anspruch 1, dadurch gekennzeichnet, daß das Polymer HM PAM eine Molekularmasse zwischen 10⁶ und 10⁷ Dalton und einen Gehalt an hydrophoben wiederkehrenden Einheiten zwischen 0,5 und 5 % aufweist.

3. Verfahren nach Anspruch 2, dadurch gekennzeichnet, daß das Polymer HM PAM, auch als H1PAM bezeichnet, worin R₅=CH₃; Z₃=COOR₇ mit R₇=C₉H₁₉, eine Molekularmasse von etwa 8.10⁶ Dalton und einen Gehalt an hydrophoben wiederkehrenden Einheiten zwischen 0,5 und 1,5 % aufweist.

4. Verfahren nach einem der Ansprüche 1 bis 3, dadurch gekennzeichnet, daß das genannte Cellulose-Derivat hydrophob modifizierte Hydroxyethylcellulose(HM HEC) ist.

5. Verfahren nach Anspruch 4, dadurch gekennzeichnet, daß die modifizierte Hydroxyethylcellulose einen hydrophoben Alkylrest mit 4 bis 25 Kohlenstoffatomen, vorzugsweise mit 8 bis 18 Kohlenstoffatomen, aufweist.

6. Verfahren nach einem der Ansprüche 4 oder 5, dadurch gekennzeichnet, daß die Molekularmasse der modifizierten Hydroxyethylcellulose unter 2 000 000 Dalton, vorzugsweise zwischen 20 000 und 500 000 Dalton, liegt.

7. Verfahren nach einem der Ansprüche 1 bis 6, dadurch gekennzeichnet, daß die Zugabemenge zwischen 1 und 30 g/l HM PAM und zwischen 1 und 30 g/l HM HEC liegt.

8. Verfahren nach Anspruch 7, dadurch gekennzeichnet, daß die Zugabemenge zwischen 1 und 6 g/l HM PAM und zwischen 1 und 5 g/l HM HEC liegt.

9. Bohrflüssigkeit (Bohrfluid) auf Wasserbasis zum Konditionieren eines Bohrloches oder für Interventionen in einem Bohrloch, dadurch gekennzeichnet, daß sie (es) umfaßt eine geeignete Menge mindestens
a) eines Polymers, als HM PAM bezeichnet, das hergestellt worden ist durch Polymerisation von hydrophilen wiederkehrenden Einheiten mit einer hydrophoben wiederkehrenden Einheit, wobei die genannte hydrophile wiederkehrende Einheit umfaßt mindestens:
- ein Acrylamid der folgenden Formel: 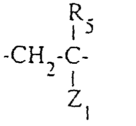 worin R₅ für H oder CH₃ und Z₁ für CONH₂ stehen, und
- gegebenenfalls Acrylsäure-, Acrylat- oder Sulfonat-Comonomere der folgenden Formel: 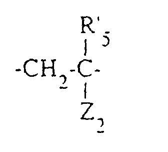 worin R'₅ für H oder CH₃ und Z₂ für COOH oder COO⁻, M⁺ oder CONHR₁SO₃⁻, M⁺ stehen, wobei R₁ H oder einen Alkyl-, Aryl- oder Alkylaryl-Rest mit 1 bis 30 Kohlenstoffatomen bedeutet, und
die genannte hydrophobe wiederkehrende Einheit des Polymers HM PAM mindestens eine der folgenden Formen hat: N-Alkylacrylamid, Alkylacrylat, N-substituiertes Acrylamid oder ein substituiertes Acrylat, wobei der substituierte Abschnitt ein nicht-ionisches Tensid darstellt, und die genannte hydrophobe wiederkehrende Einheit die folgende allgemeine Formel hat: 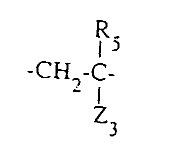 worin R₅ für H oder CH₃ und Z₃ für COOR₇, COOR₂, CONR₁R₂ oder CONR₁R₇ stehen, wobei R₇ ein nicht-ionisches Tensid und R₂ einen Alkyl-, Aryl- oder Alkylaryl-Rest mit 1 bis 30 Kohlenstoffatomen; R₁ H oder einen Alkyl-, Aryl- oder Alkylaryl-Rest mit 1 bis 30 Kohlenstoffatomen bedeuten,
b) und eines hydrophob modifizierten Cellulose-Derivats.

10. Flüssigkeit (Fluid) nach Anspruch 9, dadurch gekennzeichnet, daß das Polymer HM PAM eine Molekularmasse zwischen 10⁶ und 10⁷ Dalton und einen Gehalt an hydrophoben wiederkehrenden Einheiten zwischen 0,5 und 5 % aufweist.

11. Flüssigkeit (Fluid) nach Anspruch 10, dadurch gekennzeichnet, daß das Polymer HM PAM, auch als H1PAM bezeichnet, worin R₅=CH₃; Z₃=COOR₇ mit R₇=C₉H₁₉, eine Molekularmasse von etwa 8.10⁶ Dalton und einen Gehalt an hydrophoben wiederkehrenden Einheiten zwischen 0,5 und 1,5 % aufweist.

12. Flüssigkeit (Fluid) nach einem der Ansprüche 9 bis 11, dadurch gekennzeichnet, daß das genannte Cellulose-Derivat hydrophob modifizierte Hydroxyethylcellulose (HM HEC) ist.

13. Flüssigkeit (Fluid) nach einem der Ansprüche 9 bis 12, dadurch gekennzeichnet, daß ihre Viskosität hauptsächlich durch die Zugabe mindestens eines Polymers, ausgewählt aus der Gruppe, die besteht aus Xanthan, Scleroglucan, Wellan, Hydroxyethylcellulose (HEC), CMC, Guargummi und Polyacrylamiden, kontrolliert bzw. gesteuert wird.

14. Flüssigkeit (Fluid) nach einem der Ansprüche 9 bis 13, dadurch gekennzeichnet, daß sie (es) mindestens einen Elektrolyten in Konzentrationen, welche die Sättigungs-Konzentration erreichen können, enthält.

15. Flüssigkeit (Fluid) nach Anspruch 14, dadurch gekennzeichnet, daß der genannte Elektrolyt ausgewählt wird aus der Gruppe, die besteht aus dem Chlorid, dem Bromid, dem Carbonat, dem Acetat, dem Formiat von Natrium, Kalium, Calcium, Magnesium oder Zink.

16. Flüssigkeit (Fluid) nach einem der Ansprüche 9 bis 15, dadurch gekennzeichnet, daß sie 0,5 und 30 g/l HM HEC und HM PAM sowie 0,5 bis 20 g/l viskosmachendes Polymer enthält.

17. Flüssigkeit (Fluid) nach einem der Ansprüche 9 bis 16, dadurch gekennzeichnet, daß sie (es) 0,5 bis 10 g/l HM HEC und HM PAM, 1 bei 5 g/l viskosmachendes Polymer, vorzugsweise Xanthan, 5 bis 100 g/l KCI oder NaCl und 0 bis 30 g/l reaktiven Ton enthält.

18. Verwendung der Flüssigkeit (des Fluids) nach einem der Ansprüche 9 bis 17 als Bohrflüssigkeit (Bohrfluid).

19. Verwendung nach Anspruch 18, dadurch gekennzeichnet, daß die Bohrung einen geringen Durchmesser hat und/oder stark gekrümmt ist.

20. Additiv für die Kontrolle des Dispergierens und/oder Zerfallens von Feststoffen, die in einer Flüssigkeit (Fluid) auf Wasserbasis suspendiert sind, dadurch gekennzeichnet, daß es in geeigneter Menge enthält mindestens
a) ein Polymer, als HM PAM bezeichnet, das hergestellt worden ist durch Polymerisation von hydrophilen wiederkehrenden Einheiten mit einer hydrophoben wiederkehrenden Einheit, wobei die genannte hydrophile wiederkehrende Einheit umfaßt mindestens:
- ein Acrylamid der folgenden Formel: 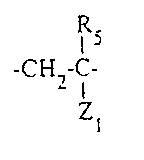 worin R₅ für H oder CH₃ und Z₁ für CONH₂ stehen, und
- gegebenenfalls Acrylsäure-, Acrylat- oder Sulfonat-Comonomere der folgenden Formel: 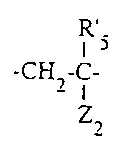 worin R'₅ für H oder CH₃ und Z₂ für COOH oder COO⁻, M⁺ oder CONHR₁SO₃⁻, M⁺ stehen, wobei R₁ H oder einen Alkyl-, Aryl- oder Alkylaryl-Rest mit 1 bis 30 Kohlenstoffatomen bedeutet, und
die genannte hydrophobe wiederkehrende Einheit des Polymers HM PAM mindestens eine der folgenden Formen hat: N-Alkylacrylamid, Alkylacrylat, N-substituiertes Acrylamid oder ein substituiertes Acrylat, wobei der substituierte Abschnitt ein nicht-ionisches Tensid darstellt, und die genannte hydrophobe wiederkehrende Einheit die folaende allaemeine Formel hat: 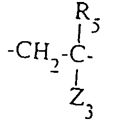 worin R₅ für H oder CH₃ und Z₃ für COOR₇, COOR₂, CONR₁R₂ oder CONR₁R₇ stehen, wobei R₇ ein nicht-ionisches Tensid und R₂ einen Alkyl-, Aryl- oder Alkylaryl-Rest mit 1 bis 30 Kohlenstoffatomen; R₁ H oder einen Alkyl-, Aryl- oder Alkylaryl-Rest mit 1 bis 30 Kohlenstoffatomen bedeuten,
b) und ein hydrophob modifiziertes Cellulose-Derivat.

## Claims

1. Method of controlling the dispersion and/or the breakup of solids in suspension in a water-based fluid, characterised in that it comprises the stage of adding to said fluid a useful quantity of a polymer, designated HM PAM, resulting from the polymerisation of hydrophilic moieties with a hydrophobic moiety, in that said hydrophilic moiety comprises at least:
- acrylamide according to the following formula: 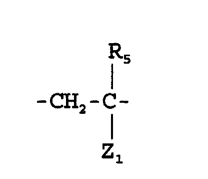 in which R₅ is H or CH₃, and Z₁ is CONH₂,
- and possibly comonomers of acrylic acid, of acrylate or of sulfonate according to the following formula: 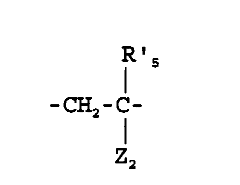 in which R'₅ is H or CH₃, and Z₂ is COOH or COO⁻, M⁺ or CONHR₁SO₃⁻, M⁺; R₁ is H or an alkyl, aryl or alkyl-aryl radical of C₁-C₃₀,
in that said hydrophobic moiety of the polymer HM PAM has at least one of the following forms: N-alkylacrylamide, alkylacrylate, N-substituted acrylamide or a substituted acrylate, the substituted part being a non-ionic surfactant, said hydrophobic moiety having the following general formulation: 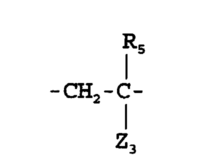 in which R₅ is H or CH₃, and Z₃ is COOR₇, COOR₂, CONR₁R₂, or CONR₁R₇, R₇ being a non-ionic surfactant and R₂ an alkyl, aryl or alkyl-aryl radical of C₁-C₃₀; R₁ is H or an alkyl, aryl or alkyl-aryl radical of C₁-C₃₀, and in association a useful quantity of a hydrophobically modified cellulose derivative.

2. Method according to claim 1, characterised in that the polymer HM PAM has a molecular mass lying between 10⁶ and 10⁷ daltons and a level of hydrophobic moieties lying between 0.5 and 5%.

3. Method according to claim 2, characterised in that the polymer HM PAM, then designated H1PAM, has R₅=CH₃; Z₃=COOR₇ with R₇=C₉H₁₉, a molecular mass of approximately 8 10⁶ daltons and a level of hydrophobic moieties lying between 0.5 and 1.5%.

4. Method according to one of claims 1 to 3, characterised in that said cellulose derivative is hydrophobically modified hydroxy ethyl cellulose (HM HEC).

5. Method according to claim 4, characterised in that the modified hydroxy ethyl cellulose comprises a hydrophobic alkyl radical comprising between 4 and 25 atoms of carbon, and preferably between 8 and 18.

6. Method according to one of claims 4 or 5, characterised in that the molecular mass of the modified hydroxy ethyl cellulose is less than 2,000,000 daltons and preferably lies between 20,000 and 500,000 daltons.

7. Method according to one of claims 1 to 6, characterised in that it comprises between 1 and 30 g/l of HM PAM and between 1 and 30 g/l of HM HEC.

8. Method according to claim 7, characterised in that it comprises between 1 and 6 g/l of HM PAM and between 1 and 5 g/l of HM HEC.

9. Water-based fluid intended for well drilling, well completion or workover operations in a well, characterised in that it comprises useful amounts of at least:
a) a polymer, designated HM PAM, resulting from the polymerisation of hydrophilic moieties with a hydrophobic moiety, in that said hydrophilic moiety comprises:
- acrylamide according to the following formula: 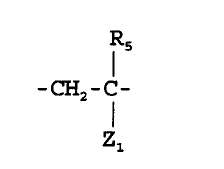 in which R₅ is H or CH₃, and Z₁ is CONH₂,
- and possibly comonomers of acrylic acid, of acrylate or of sulfonate according to the following formula: 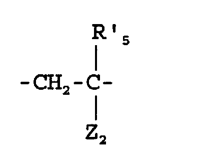 in which R'₅ is H or CH₃, and Z₂ is COOH or COO⁻, M⁺ or CONHR₁SO₃⁻, M⁺; R₁ is H or an alkyl, aryl or alkyl-aryl radical of C₁-C₃₀,
in that said hydrophobic moiety of the polymer HM PAM has at least one of the following forms: N-alkylacrylamide, alkylacrylate, N-substituted acrylamide or a substituted acrylate, the substituted part being a non-ionic surfactant, said hydrophobic moiety having the following general formulation: 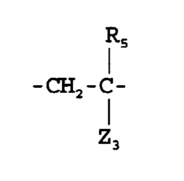 in which R₅ is H or CH₃, and Z₃ is COOR₇, COOR₂, CONR₁R₂, or CONR₁R₇, R₇ being a non-ionic surfactant and R₂ an alkyl, aryl or alkyl-aryl radical of C₁-C₃₀; R₁ is H or an alkyl, aryl or alkyl-aryl radical of C₁-C₃₀, and
b) a hydrophobically modified cellulose derivative.

10. Fluid according to claim 9, characterised in that the polymer HM PAM has a molecular mass lying between 10⁶ and 10⁷ daltons and a level of hydrophobic moieties lying between 0.5 and 5%.

11. Fluid according to claim 10, characterised in that the polymer HM PAM, then designated H1PAM, has R₅=CH₃; Z₃=COOR₇ with R₇=C₉H₁₉, in that it has a molecular mass of approximately 8 10⁶ daltons and a level of hydrophobic moieties lying between 0.5 and 1.5%.

12. Fluid according to one of claims 9 to 11, characterised in that said cellulose derivative is hydrophobically modified hydroxy ethyl cellulose (HM HEC).

13. Fluid according to one of claims 9 to 12, characterised in that its viscosity is mainly controlled by adding at least one polymer selected from the group constituted by xanthan, scleroglucan, wellan, hydroxy ethyl cellulose (HEC), CMC, guar gum and polyacrylamides.

14. Fluid according to one of claims 9 to 13, characterised in that it comprises at least one electrolyte at concentrations which may reach saturation.

15. Fluid according to claim 14, characterised in that said electrolyte is selected from the group constituted by the chloride, bromide, carbonate, acetate, formate of sodium, potassium, calcium, magnesium or zinc.

16. Fluid according to one of claims 9 to 15, characterised in that it comprises between 0.5 and 30 g/l of HM HEC and of HM PAM, and between 0.5 and 20 g/l of viscosifying polymer.

17. Fluid according to one of claims 9 to 16, characterised in that it comprises between 0.5 and 10 g/l of HM HEC and of HM PAM, between 1 and 5 g/l of viscosifying polymer, preferably xanthan, between 5 and 100 g/l of KCl or of NaCl and between 0 and 30 g/l of reactive clay.

18. Application of the fluid according to one of claims 9 to 17 to a drilling fluid.

19. Application according to claim 18, characterised in that the drilling is slim-hole and/or highly deviated drilling.

20. Additive for controlling the dispersion and/or break-up of solids in suspension in a water-based fluid, characterised in that it comprises useful quantities of at least:
a) a polymer, designated HM PAM, resulting from the polymerisation of hydrophilic moieties with a hydrophobic moiety, in that said hydrophilic moiety comprises:
- acrylamide according to the following formula: 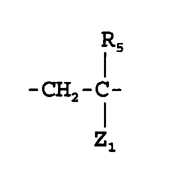 in which R₅ is H or CH₃, and Z₁ is CONH₂,
- and possibly comonomers of acrylic acid, of acrylate or of sulfonate according to the following formula: 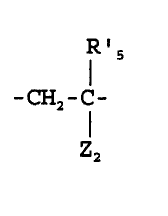 in which R'₅ is H or CH₃, and Z₂ is COOH or COO⁻, M⁺ or CONHR₁SO₃⁻, M⁺; R₁ is H or an alkyl, aryl or alkyl-aryl radical of C₁-C₃₀,
in that said hydrophobic moiety of the polymer HM PAM has at least one of the following forms: N-alkylacrylamide, alkylacrylate, N-substituted acrylamide or a substituted acrylate, the substituted part being a non-ionic surfactant, said hydrophobic unit having the following general formulation: 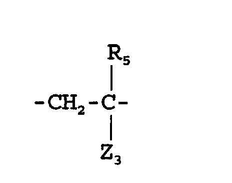 in which R₅ is H or CH₃, and Z₃ is COOR₇, COOR₂, CONR₁R₂, or CONR₁R₇, R₇ being a non-ionic surfactant and R₂ an alkyl, aryl or alkyl-aryl radical of C₁-C₃₀; R₁ is H or an alkyl, aryl or alkyl-aryl radical of C₁-C₃₀, and
b) a hydrophobically modified cellulose derivative.
